# EUROPEAN PATENT APPLICATION

(11) **EP 4 697 780 A1**
(43) Date of publication of application: **18.02.2026**
(21) Application number: 24806386.9
(22) Date of filing: 06.05.2024
(51) Int. Cl.: H04W 24/02

(54) **COMMUNICATION METHOD AND COMMUNICATION APPARATUS**

(30) Priority: 12.05.2023 CN 202310539760
(71) Applicant: Huawei Technologies Co., Ltd., Shenzhen, Guangdong 518129 (CN)
(72) Inventor: CHENG, Wenjie, Shenzhen, Guangdong 518129 (CN); ZENG, Yu, Shenzhen, Guangdong 518129 (CN); GENG, Tingting, Shenzhen, Guangdong 518129 (CN)
(74) Representative: Goddar, Heinz J.
(86) International application number: PCT/CN2024/091143
(87) International publication number: WO 2024/235030

(57) **Abstract**

Embodiments of this application provide a communication method and a communication apparatus. The method is applied to a first network device, and the method includes: sending first indication information to a second network device, where the first indication information indicates the second network device to store immediate MDT configuration information of at least one UE, and the immediate MDT configuration information is used by the at least one UE to perform measurement for MDT data; receiving immediate MDT configuration information of a target UE sent by the second network device; sending the immediate MDT configuration information of the target UE to the target UE; and receiving first data sent by the target UE, and obtaining target MDT measurement data of the target UE based on the first data. In the solutions provided in embodiments of this application, the first network device may obtain the target MDT measurement data of the target UE, that is, may obtain continuous measurement data of the target UE.

## Description

This application claims priority to Chinese Patent Application No. 202310539760.9, filed with the China National Intellectual Property Administration on May 12, 2023 and entitled "COMMUNICATION METHOD AND COMMUNICATION APPARATUS", which is incorporated herein by reference in its entirety.

### TECHNICAL FIELD

Embodiments of this application relate to the communication field, and in particular, to a communication method and communication apparatus.

### BACKGROUND

In some scenarios, for example, training or inference based on an artificial intelligence (artificial intelligence, AI) model, a network device needs to obtain continuous measurement data of a user equipment (user equipment, UE) across radio resource control (radio resource control, RRC) states. Currently, the continuous measurement data of the UE may be collected in a minimization of drive tests (minimization of drive tests, MDT) manner.

When the UE is in an RRC connected state, a delivery path of an MDT configuration may be as follows: operation, administration and maintenance (operation administration and maintenance, OAM) to a 5th generation mobile communication technology core network (5th generation mobile communication technology core, 5GC) to a next generation NodeB (next generation NodeB, gNB) to the UE. When the UE enters an RRC idle state from the RRC connected state or an RRC inactive state, the UE, the gNB, and the 5GC release an immediate MDT configuration in the MDT configuration. When the UE enters the RRC connected state or the RRC inactive state again from the RRC idle state, because the OAM does not sense an RRC state of the UE, the OAM does not send the immediate MDT configuration of the UE to the gNB through the 5GC again. In addition, when the UE is in the RRC idle state, the UE, the gNB, and the 5GC have released the immediate MDT configuration in the MDT configuration used when the UE is in the RRC connected state or the RRC inactive state last time. Therefore, the gNB cannot deliver, to the UE again, the immediate MDT configuration used when the UE is in the RRC connected state or the RRC inactive state last time. As a result, the gNB cannot obtain the continuous measurement data of the UE.

### SUMMARY

This application provides a communication method and a communication apparatus, so that a gNB may obtain continuous measurement data of a UE.

According to a first aspect, a communication method is provided. The method is applied to a first network device, and the method includes: sending first indication information to a second network device, where the first indication information indicates the second network device to store immediate minimization of drive tests MDT configuration information of at least one terminal device UE, and the immediate MDT configuration information is used by the at least one UE to perform measurement for MDT data; receiving immediate MDT configuration information of a target UE sent by the second network device, where the target UE is one of the at least one UE; sending the immediate MDT configuration information of the target UE to the target UE; and receiving first data sent by the target UE, and obtaining target MDT measurement data of the target UE based on the first data, where the first data includes first MDT measurement data obtained by the target UE and data needed by the first network device to obtain second MDT measurement data.

In the solution provided in this embodiment of this application, the first network device sends, to the second network device, the first indication information indicating the second network device to store the immediate MDT configuration information of the at least one UE, receives the immediate MDT configuration information of the target UE sent by the second network device when the target UE enters an RRC connected state or an RRC inactive state from an RRC idle state, and receives the first data sent by the target UE. The first network device may obtain the target MDT measurement data of the target UE based on the first data, that is, may obtain continuous measurement data of the target UE. Particularly, if the immediate MDT configuration information of the UE is used for AI training, inference or training accuracy of an AI model deployed on the first network device may be further improved.

With reference to the first aspect, in some possible implementations, the sending the first indication information to the second network device includes: sending the first indication information to the second network device if detecting that the at least one UE enters an RRC idle state, or receiving the immediate MDT configuration information of the at least one UE.

In the solution provided in this embodiment of this application, if the first network device detects that the at least one UE enters the RRC idle state, the first network device may send the first indication information to the second network device, so that the second network device may store the immediate MDT configuration information of the at least one UE based on the first indication information. In this case, it can be avoided that the immediate MDT configuration information of the at least one UE is released because the UE enters the RRC idle state. Alternatively, if the first network device receives the immediate MDT configuration information of the at least one UE, the first network device may send the first indication information to the second network device, so that the second network device may store the immediate MDT configuration information of the at least one UE based on the first indication information. In this case, an RRC state of the UE is not considered. If the first network device receives the immediate MDT configuration information of the at least one UE, the first network device may send the first indication information to the second network device. The first network device may receive the immediate MDT configuration information of the target UE sent by the second network device when the target UE enters the RRC connected state or the RRC inactive state from the RRC idle state, and receive the first data sent by the target UE. The first network device may obtain the target MDT measurement data of the target UE based on the first data, that is, may obtain the continuous measurement data of the target UE.

With reference to the first aspect, in some possible implementations, the immediate MDT configuration information includes at least one of the following: an MDT activation type, an MDT area scope, MDT-based signaling of a public land mobile network PLMN list, an identifier of the first network device, an identifier of the at least one UE, immediate MDT configuration temporary storage duration, and an immediate MDT configuration temporary storage indication.

With reference to the first aspect, in some possible implementations, the immediate MDT configuration information of the at least one UE carries an MDT identifier or does not carry the MDT identifier, and the MDT identifier indicates the first network device to obtain continuous MDT measurement data of the at least one UE across RRC states; and the method further includes: determining whether the immediate MDT configuration information of the target UE carries the MDT identifier; and if determining that the immediate MDT configuration information of the target UE carries the MDT identifier and the target UE does not need to provide the first data, sending second indication information to the second network device, where the second indication information indicates the second network device to release the immediate MDT configuration information of the target UE.

In the solution provided in this embodiment of this application, if the first network device determines that the immediate MDT configuration information of the target UE carries the MDT identifier and the target UE does not need to provide the first data, the first network device may send, to the second network device, the second indication information indicating the second network device to release the immediate MDT configuration information of the target UE, so that the second network device may release the immediate MDT configuration information of the target UE based on the second indication information. This can decrease a possibility of an insufficient memory in the second network device, and increase a possibility that the second network device successfully stores immediate MDT configuration information of another UE.

With reference to the first aspect, in some possible implementations, the second indication information includes at least one of the following: an identifier of the target UE, the identifier of the first network device, and an immediate MDT configuration release indication.

According to a second aspect, a communication method is provided. The method is applied to a second network device, and the method includes: receiving first indication information sent by a first network device, where the first indication information indicates the second network device to store immediate minimization of drive tests MDT configuration information of at least one terminal device UE, and the immediate MDT configuration information is used by the at least one UE to perform measurement for MDT data; storing the immediate MDT configuration information of the at least one UE based on the first indication information; and if a target UE enters a radio resource control RRC connected state or an RRC inactive state from an RRC idle state, sending immediate MDT configuration information of the target UE to the first network device, where the target UE is one of the at least one UE.

In the solution provided in this embodiment of this application, the second network device receives the first indication information that is sent by the first network device and that indicates the second network device to store the immediate MDT configuration information of the at least one UE, and the second network device stores the immediate MDT configuration information of the at least one UE based on the first indication information. When the target UE enters the RRC connected state or the RRC inactive state from the RRC idle state, the second network device may send the immediate MDT configuration information of the target UE to the first network device because the second network device stores the immediate MDT configuration information of the at least one UE, so that the first network device may send the immediate MDT configuration information of the target UE to the target UE, the target UE may send the first data to the first network device based on the MDT configuration information of the target UE, and the first network device may obtain the target MDT measurement data of the target UE based on the first data, that is, the first network device may obtain continuous measurement data of the target UE.

With reference to the second aspect, in some possible implementations, the immediate MDT configuration information includes at least one of the following: an MDT activation type, an MDT area scope, MDT-based signaling of a public land mobile network PLMN list, an identifier of the first network device, an identifier of the at least one UE, immediate MDT configuration temporary storage duration, and an immediate MDT configuration temporary storage indication.

With reference to the second aspect, in some possible implementations, the sending the immediate MDT configuration information of the target UE to the first network device includes: sending the immediate MDT configuration information of the target UE to the first network device based on the first indication information and an identifier of the target UE.

In the solution provided in this embodiment of this application, the second network device may send the immediate MDT configuration information of the target UE to the first network device based on the first indication information and the identifier of the target UE, to ensure correctness of the immediate MDT configuration information of the target UE sent by the second network device to the first network device, and ensure that the first network device obtains the continuous measurement data of the target UE.

With reference to the second aspect, in some possible implementations, the method further includes: receiving second indication information sent by the first network device, where the second indication information indicates the second network device to release the immediate MDT configuration information of the target UE; and releasing the immediate MDT configuration information of the target UE based on the second indication information.

In the solution provided in this embodiment of this application, the second network device receives the second indication information that is sent by the first network device and that indicates the second network device to release the immediate MDT configuration information of the target UE, and the second network device may release the immediate MDT configuration information of the target UE based on the second indication information. This can decrease a possibility of an insufficient memory in the second network device, and increase a possibility that the second network device successfully stores immediate MDT configuration information of another UE.

With reference to the second aspect, in some possible implementations, the second indication information includes at least one of the following: the identifier of the target UE, the identifier of the first network device, and an immediate MDT configuration release indication.

With reference to the second aspect, in some possible implementations, the storing the immediate MDT configuration information of the at least one UE based on the first indication information includes: storing the immediate MDT configuration information of the at least one UE within preset duration based on the first indication information.

In the solution provided in this embodiment of this application, when storing the immediate MDT configuration information of the at least one UE, the second network device may store the immediate MDT configuration information of the at least one UE within the preset duration, to improve efficiency of storing the immediate MDT configuration information of the at least one UE by the second network device, and help the first network device obtain the continuous measurement data of the target UE.

With reference to the second aspect, in some possible implementations, the method further includes: if not successfully storing the immediate MDT configuration information of the at least one UE within the preset duration, sending third indication information to the first network device and/or a third network device, where the third indication information indicates a failure in storing the immediate MDT configuration information of the at least one UE and a cause of the failure in storing the immediate MDT configuration information of the at least one UE.

In the solution provided in this embodiment of this application, if not successfully storing the immediate MDT configuration information of the at least one UE within the preset duration, the second network device may send the third indication information to the first network device and/or the third network device, where the third indication information indicates the failure in storing the immediate MDT configuration information of the at least one UE and the cause of the failure in storing the immediate MDT configuration information of the at least one UE. In this way, the first network device knows that the second network device cannot continue to store the immediate MDT configuration information of the UE currently, so that the first network device may request another device to store the immediate MDT configuration information of the at least one UE. For the second network device, if the second network device cannot continue to store the immediate MDT configuration information of the UE currently because of the insufficient memory, the second network device may release a part of stored immediate MDT configuration information of the UE, to ensure that the immediate MDT configuration information of the UE can continue to be stored subsequently, and increase a success rate of storing the immediate MDT configuration information of the UE.

According to a third aspect, a communication method is provided. The method is applied to a target terminal device UE, and the method includes: receiving immediate minimization of drive tests MDT configuration information of the target UE sent by a first network device, where the immediate MDT configuration information of the target UE is used by the target UE to perform measurement for MDT data; and sending first data to the first network device based on the immediate MDT configuration information of the target UE, where the first data includes first MDT measurement data obtained by the target UE and data needed by the first network device to obtain second MDT measurement data.

In the solution provided in this embodiment of this application, the target UE receives the immediate MDT configuration information of the target UE sent by the first network device, and the target UE may send the first data to the first network device based on the MDT configuration information of the target UE, so that the first network device may obtain target MDT measurement data of the target UE based on the first data, that is, the first network device may obtain continuous measurement data of the target UE.

With reference to the third aspect, in some possible implementations, the immediate MDT configuration information includes at least one of the following: an MDT activation type, an MDT area scope, MDT-based signaling of a public land mobile network PLMN list, an identifier of the first network device, an identifier of the at least one UE, immediate MDT configuration temporary storage duration, and an immediate MDT configuration temporary storage indication.

According to a fourth aspect, a communication method is provided. The method is applied to a second network device, and the method includes: if receiving immediate minimization of drive tests MDT configuration information of at least one terminal device UE sent by a third network device, storing the immediate MDT configuration information of the at least one UE; and when a cell accessed by a target UE includes a target area, sending immediate MDT configuration information of the target UE to a first network device, where the target UE is one of the at least one UE, and the target area is in an MDT tracking area included in the immediate MDT configuration information of the target UE.

In the solution provided in this embodiment of this application, when the second network device receives the immediate MDT configuration information of the at least one UE sent by the third network device, the second network device may store the immediate MDT configuration information of the at least one UE. When the cell accessed by the target UE includes the target area, the second network device may send the immediate MDT configuration information of the target UE to the target UE via the first network device because the second network device stores the immediate MDT configuration information of the at least one UE, so that the target UE may send the first data to the first network device based on the MDT configuration information of the target UE, and the first network device may obtain target MDT measurement data of the target UE based on the first data, that is, the first network device may obtain continuous measurement data of the target UE.

With reference to the fourth aspect, in some possible implementations, the immediate MDT configuration information includes at least one of the following: an MDT activation type, an MDT area scope, MDT-based signaling of a public land mobile network PLMN list, an identifier of the first network device, an identifier of the at least one UE, immediate MDT configuration temporary storage duration, and an immediate MDT configuration temporary storage indication.

With reference to the fourth aspect, in some possible implementations, the sending the immediate MDT configuration information of the target UE to the first network device includes: sending the immediate MDT configuration information of the target UE to the first network device based on an identifier of the target UE.

With reference to the fourth aspect, in some possible implementations, the method further includes: receiving second indication information sent by the first network device, where the second indication information indicates the second network device to release the immediate MDT configuration information of the target UE; and releasing the immediate MDT configuration information of the target UE based on the second indication information.

With reference to the fourth aspect, in some possible implementations, the second indication information includes at least one of the following: the identifier of the target UE, the identifier of the first network device, and an immediate MDT configuration release indication.

With reference to the fourth aspect, in some possible implementations, the storing the immediate MDT configuration information of the at least one UE includes: storing the immediate MDT configuration information of the at least one UE within preset duration.

With reference to the fourth aspect, in some possible implementations, the method further includes: if not successfully storing the immediate MDT configuration information of the at least one UE within the preset duration, sending third indication information to the first network device and/or a third network device, where the third indication information indicates a failure in storing the immediate MDT configuration information of the at least one UE and a cause of the failure in storing the immediate MDT configuration information of the at least one UE.

For beneficial effects of the fourth aspect, refer to the descriptions of the second aspect. Details are not described herein again.

According to a fifth aspect, a communication method is provided. The method is applied to a first network device, and the method includes: receiving immediate minimization of drive tests MDT configuration information of a target terminal device UE sent by a second network device; sending the immediate MDT configuration information of the target UE to the target UE; and receiving first data sent by the target UE, and obtaining target MDT measurement data of the target UE based on the first data, where the first data includes first MDT measurement data obtained by the target UE and data needed by the first network device to obtain second MDT measurement data.

In the solution provided in this embodiment of this application, the first network device may receive the immediate MDT configuration information of the target UE sent by the second network device, and receive the first data sent by the target UE. The first network device may obtain the target MDT measurement data of the target UE based on the first data, that is, may obtain continuous measurement data of the target UE. Particularly, if the immediate MDT configuration information of the UE is used for AI training, inference or training accuracy of an AI model deployed on the first network device may be further improved.

With reference to the fifth aspect, in some possible implementations, the immediate MDT configuration information includes at least one of the following: an MDT activation type, an MDT area scope, MDT-based signaling of a public land mobile network PLMN list, an identifier of the first network device, an identifier of the at least one UE, immediate MDT configuration temporary storage duration, and an immediate MDT configuration temporary storage indication.

With reference to the fifth aspect, in some possible implementations, the immediate MDT configuration information of the at least one UE carries an MDT identifier or does not carry the MDT identifier, and the MDT identifier indicates the first network device to obtain continuous MDT measurement data of the at least one UE across radio resource control RRC states; and the method further includes: determining whether the immediate MDT configuration information of the target UE carries the MDT identifier; and if determining that the immediate MDT configuration information of the target UE carries the MDT identifier and the target UE does not need to provide the first data, sending second indication information to the second network device, where the second indication information indicates the second network device to release the immediate MDT configuration information of the target UE.

With reference to the fifth aspect, in some possible implementations, the second indication information includes at least one of the following: an identifier of the target UE, the identifier of the first network device, and an immediate MDT configuration release indication.

For beneficial effects of the fifth aspect, refer to the descriptions of the first aspect. Details are not described herein again.

According to a sixth aspect, a communication method is provided. The method is applied to a target terminal device UE, and the method includes: receiving immediate minimization of drive tests MDT configuration information of the target UE sent by a first network device, where the immediate MDT configuration information of the target UE is used by the target UE to perform measurement for MDT data; and sending first data to the first network device based on the immediate MDT configuration information of the target UE, where the first data includes first MDT measurement data obtained by the target UE and data needed by the first network device to obtain second MDT measurement data.

In the solution provided in this embodiment of this application, the target UE receives the immediate MDT configuration information of the target UE sent by the first network device, and the target UE may send the first data to the first network device based on the MDT configuration information of the target UE, so that the first network device may obtain target MDT measurement data of the target UE based on the first data, that is, the first network device may obtain continuous measurement data of the target UE.

With reference to the sixth aspect, in some possible implementations, the immediate MDT configuration information includes at least one of the following: an MDT activation type, an MDT area scope, MDT-based signaling of a public land mobile network PLMN list, an identifier of the first network device, an identifier of the at least one UE, immediate MDT configuration temporary storage duration, and an immediate MDT configuration temporary storage indication.

According to a seventh aspect, a communication apparatus is provided. For beneficial effects, refer to the descriptions in the first aspect. Details are not described herein again. The communication apparatus has a function of implementing behavior in the method embodiment in the first aspect. The function may be implemented by hardware, or may be implemented by hardware executing corresponding software. The hardware includes one or more modules corresponding to the foregoing function. In a possible design, the communication apparatus includes: a transceiver module, configured to send first indication information to a second network device, where the first indication information indicates the second network device to store immediate minimization of drive tests MDT configuration information of at least one terminal device UE, and the immediate MDT configuration information is used by the at least one UE to perform measurement for MDT data; receive immediate MDT configuration information of a target UE sent by the second network device, where the target UE is one of the at least one UE; send the immediate MDT configuration information of the target UE to the target UE; and receive first data sent by the target UE; and a processing module, configured to obtain target MDT measurement data of the target UE based on the first data, where the first data includes first MDT measurement data obtained by the target UE and data needed by the first network device to obtain second MDT measurement data. These modules may perform corresponding functions in the method example in the first aspect. For details, refer to the detailed descriptions in the method example. Details are not described herein again.

According to an eighth aspect, a communication apparatus is provided. For beneficial effects, refer to the descriptions in the second aspect. Details are not described herein again. The communication apparatus has a function of implementing behavior in the method embodiment in the second aspect. The function may be implemented by hardware, or may be implemented by hardware executing corresponding software. The hardware includes one or more modules corresponding to the foregoing function. In a possible design, the communication apparatus includes: a transceiver module, configured to receive first indication information sent by a first network device, where the first indication information indicates a second network device to store immediate minimization of drive tests MDT configuration information of at least one terminal device UE, and the immediate MDT configuration information is used by the at least one UE to perform measurement for MDT data; and a processing module, configured to store the immediate MDT configuration information of the at least one UE based on the first indication information. The transceiver module is further configured to: if a target UE enters a radio resource control RRC connected state or an RRC inactive state from an RRC idle state, send immediate MDT configuration information of the target UE to the first network device, where the target UE is one of the at least one UE. These modules may perform corresponding functions in the method example in the second aspect. For details, refer to the detailed descriptions in the method example. Details are not described herein again.

According to a ninth aspect, a communication apparatus is provided. For beneficial effects, refer to the descriptions in the third aspect. Details are not described herein again. The communication apparatus has a function of implementing behavior in the method instance in the third aspect. The function may be implemented by hardware, or may be implemented by hardware executing corresponding software. The hardware or the software includes one or more modules corresponding to the foregoing function. In a possible design, the communication apparatus includes: a transceiver module, configured to receive immediate minimization of drive tests MDT configuration information of a target UE sent by a first network device, where the immediate MDT configuration information of the target UE is used by the target UE to perform measurement for MDT data; and send first data to the first network device based on the immediate MDT configuration information of the target UE, where the first data includes first MDT measurement data obtained by the target UE and data needed by the first network device to obtain second MDT measurement data. These modules may perform corresponding functions in the method example in the third aspect. For details, refer to the detailed descriptions in the method example. Details are not described herein again.

According to a tenth aspect, a communication apparatus is provided. For beneficial effects, refer to the descriptions in the fourth aspect. Details are not described herein again. The communication apparatus has a function of implementing behavior in the method instance in the fourth aspect. The function may be implemented by hardware, or may be implemented by hardware executing corresponding software. The hardware or the software includes one or more modules corresponding to the foregoing function. In a possible design, the communication apparatus includes: a processing module, configured to: if receiving immediate minimization of drive tests MDT configuration information of at least one terminal device UE sent by a third network device, store the immediate MDT configuration information of the at least one UE; and a transceiver module, configured to: when a cell accessed by a target UE includes a target area, send immediate MDT configuration information of the target UE to a first network device, where the target UE is one of the at least one UE, and the target area is in an MDT tracking area included in the immediate MDT configuration information of the target UE. These modules may perform corresponding functions in the method example in the fourth aspect. For details, refer to the detailed descriptions in the method example. Details are not described herein again.

According to an eleventh aspect, a communication apparatus is provided. For beneficial effects, refer to the descriptions in the fifth aspect. Details are not described herein again. The communication apparatus has a function of implementing behavior in the method example in the fifth aspect. The function may be implemented by hardware, or may be implemented by hardware executing corresponding software. The hardware or the software includes one or more modules corresponding to the foregoing function. In a possible design, the communication apparatus includes: a transceiver module, configured to receive immediate minimization of drive tests MDT configuration information of a target terminal device UE sent by a second network device; send the immediate MDT configuration information of the target UE to the target UE; and receive first data sent by the target UE; and a processing module, configured to obtain target MDT measurement data of the target UE based on the first data, where the first data includes first MDT measurement data obtained by the target UE and data needed by a first network device to obtain second MDT measurement data. These modules may perform corresponding functions in the method example in the fifth aspect. For details, refer to the detailed descriptions in the method example. Details are not described herein again.

According to a twelfth aspect, a communication apparatus is provided. For beneficial effects, refer to the descriptions in the sixth aspect. Details are not described herein again. The communication apparatus has a function of implementing behavior in the method example in the sixth aspect. The function may be implemented by hardware, or may be implemented by hardware executing corresponding software. The hardware or the software includes one or more modules corresponding to the foregoing function. In a possible design, the communication apparatus includes: a transceiver module, configured to receive immediate minimization of drive tests MDT configuration information of a target UE sent by a first network device, where the immediate MDT configuration information of the target UE is used by the target UE to perform measurement for MDT data; and send first data to the first network device based on the immediate MDT configuration information of the target UE, where the first data includes first MDT measurement data obtained by the target UE and data needed by the first network device to obtain second MDT measurement data. These modules may perform corresponding functions in the method example in the sixth aspect. For details, refer to the detailed descriptions in the method example. Details are not described herein again.

According to a thirteenth aspect, a computer program product is provided. The computer program product includes computer program code, and when the computer program code is run, the method performed by the terminal device in the foregoing aspects is performed.

According to a fourteenth aspect, a computer program product is provided. The computer program product includes computer program code. When the computer program code is run, the method performed by the network device (for example, the first network device or the second network device) in the foregoing aspects is performed.

According to a fifteenth aspect, this application provides a chip system. The chip system includes a processor, configured to implement a function of the terminal device in the methods in the foregoing aspects. In a possible design, the chip system further includes a storage, configured to store program instructions and/or data. The chip system may include a chip, or may include a chip and another discrete component.

According to a sixteenth aspect, this application provides a chip system. The chip system includes a processor, configured to implement a function of the network device (for example, the first network device or the second network device) in the methods in the foregoing aspects. In a possible design, the chip system further includes a storage, configured to store program instructions and/or data. The chip system may include a chip, or may include a chip and another discrete component.

According to a seventeenth aspect, this application provides a computer-readable storage medium. The computer-readable storage medium stores a computer program. When the computer program runs, the method performed by the terminal device in the foregoing aspects is implemented.

According to an eighteenth aspect, this application provides a computer-readable storage medium. The computer-readable storage medium stores a computer program. When the computer program runs, the method performed by the network device (for example, the first network device or the second network device) in the foregoing aspects is implemented.

### BRIEF DESCRIPTION OF DRAWINGS

FIG. 1 is a diagram of an architecture of a mobile communication system to which embodiments of this application are applied;
FIG. 2 is a diagram of a CU-DU architecture;
FIG. 3A and FIG. 3B are a diagram of a communication method according to an embodiment of this application;
FIG. 4A and FIG. 4B are a diagram of another communication method according to an embodiment of this application;
FIG. 5A and FIG. 5B are a diagram of still another communication method according to an embodiment of this application;
FIG. 6 is a diagram of yet another communication method according to an embodiment of this application;
FIG. 7 is a diagram of a communication apparatus according to an embodiment of this application; and
FIG. 8 is a diagram of another communication apparatus according to an embodiment of this application.

### DESCRIPTION OF EMBODIMENTS

In the specification, claims, and accompanying drawings of this application, the terms "first", "second", "third", and the like are intended to distinguish between different objects but do not limit a particular order.

In embodiments of this application, the word "example" or "for example" is used to represent giving an example, an illustration, or a description. Any embodiment or design solution described as an "example" or "for example" in embodiments of this application should not be explained as being more preferred or having more advantages than another embodiment or design solution. Exactly, use of the word "example", "for example", or the like is intended to present a related concept in a specific manner.

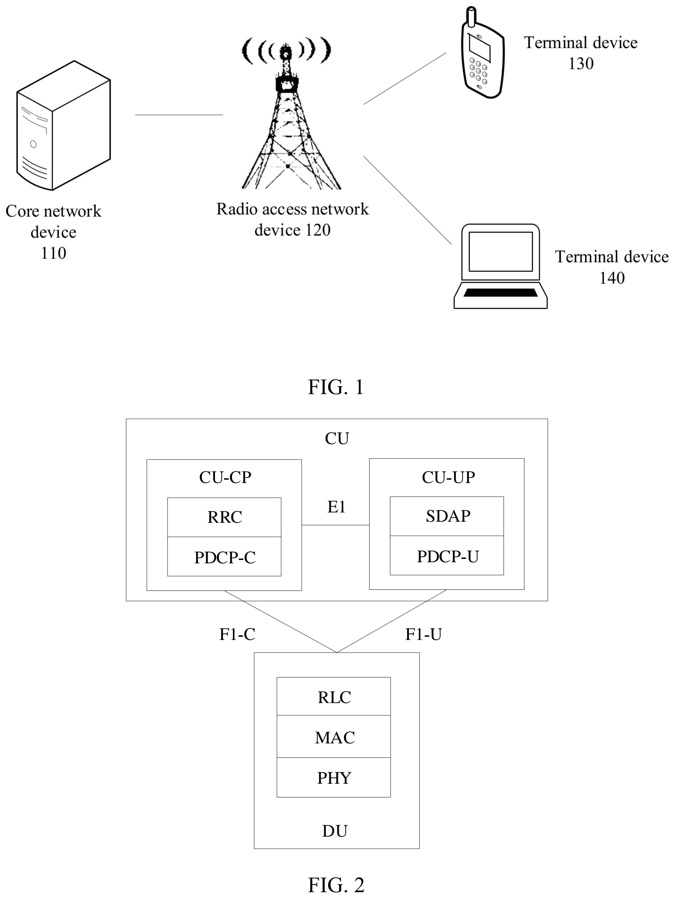

FIG. 1 is a diagram of an architecture of a mobile communication system to which embodiments of this application are applied. As shown in FIG. 1, the mobile communication system includes a core network device 110, a radio access network device 120, and at least one terminal device (for example, a terminal device 130 and a terminal device 140 shown in FIG. 1). The terminal device is connected to the radio access network device in a wireless manner, and the radio access network device is connected to the core network device in a wireless or wired manner. The core network device and the radio access network device may be different independent physical devices. Alternatively, a function of the core network device and a logical function of the radio access network device may be integrated into a same physical device. Alternatively, a part of functions of the core network device and a part of functions of the radio access network device may be integrated into a physical device. The terminal device may be at a fixed position, or may be mobile. FIG. 1 is merely a diagram. The communication system may further include other network devices, for example, may further include a wireless relay device and a wireless backhaul device, which are not shown in FIG. 1. Quantities of core network devices, radio access network devices, and terminal devices included in the mobile communication system are not limited in this embodiment of this application.

The radio access network device is an access device that is used by the terminal device to access the mobile communication system in a wireless manner. The radio access network device may be a base station (base station), an evolved NodeB (evolved NodeB, eNodeB), a transmission reception point (transmission reception point, TRP), a gNB in a 5G mobile communication system, a base station in a future mobile communication system, an access node in a Wi-Fi system, or the like. Alternatively, the radio access network device may be a module or a unit that implements a part of functions of a base station, for example, may be a central unit (central unit, CU) or a distributed unit (distributed unit, DU). It may be understood that the base station is divided into the CU and the DU from a perspective of a logical function. The CU and the DU may be physically separated or deployed together. FIG. 2 is a diagram of a CU-DU architecture. One DU shown in the figure is connected to one CU. In addition, a plurality of DUs may share one CU, or one DU may be connected to a plurality of CUs (not shown in the figure). The CU and the DU may be connected through an interface, for example, an F1 interface. The CU and the DU may be obtained through division based on a protocol layer of a wireless network. For example, a possible division manner is that the CU is configured to perform functions of an RRC layer, a service data adaptation protocol (service data adaptation protocol, SDAP) layer, and a packet data convergence protocol (packet data convergence protocol, PDCP) layer, and the DU is configured to perform functions of a radio link control (radio link control, RLC) layer, a medium access control (medium access control, MAC) layer, a physical (physical) layer, and the like. It should be understood that processing function division of the CU and the DU based on the protocol layers is merely an example, and there may be another division manner. For example, the CU or the DU may have functions of more protocol layers through division. For example, the CU or the DU may alternatively have some processing functions of the protocol layers through division. In a design, some functions of the RLC layer and functions of a protocol layer above the RLC layer are set on the CU, and remaining functions of the RLC layer and functions of a protocol layer below the RLC layer are set on the DU. In another design, functions of the CU or the DU may alternatively be obtained through division based on a service type or another system requirement. For example, division is performed based on a latency, a function whose processing time needs to satisfy a latency requirement is set on the DU, and a function whose processing time does not need to satisfy the latency requirement is set on the CU. In another design, the CU may alternatively have one or more functions of the core network. One or more CUs may be set in a centralized manner or a split manner. For example, the CUs may be disposed on a network side for ease of centralized management. The DU may have a plurality of radio frequency functions, or the radio frequency functions may be disposed remotely.

Functions of the CU may be implemented by one entity or different entities. For example, the functions of the CU may be further divided. For example, a control plane (control plane, CP) and a user plane (user plane, UP) are separated, namely, a CU-control plane (CU-CP) and a CU-user plane (CU-UP). For example, the CU-CP and the CU-UP may be implemented by different functional entities, and are connected through an E1 interface. The CU-CP and the CU-UP may be coupled to the DU, to jointly perform functions of the base station. The CU-CP may further include a further division architecture. To be specific, the existing CU-CP is further divided into a CU-CP 1 and a CU-CP 2. The CU-CP 1 includes various radio resource management functions, and the CU-CP 2 includes only an RRC function and a PDCP-C function (that is, a basic function of control plane signaling at the PDCP layer).

A specific technology and a specific device form that are used by the radio access network device and the core network device are not limited in embodiments of this application. In this application, the radio access network device and the core network device may be briefly referred to as network devices. For example, the core network device 110 may be referred to as a network device 110, and the radio access network device 120 may be referred to as a network device 120.

The terminal device may also be referred to as a terminal, a UE, a mobile station, a mobile terminal, or the like. The terminal device may include a wireless terminal device or a wired terminal device. The wireless terminal device may be a device that provides a user with voice and/or data connectivity, a handheld device having a wireless connection function, or another processing device connected to a wireless modem. The wireless terminal device may communicate with one or more core networks through a radio access network (radio access network, RAN). The wireless terminal device may be a mobile terminal, such as a mobile phone (also referred to as a "cellular" phone) or a computer with a mobile terminal. For example, the wireless terminal device may be a portable, pocket-sized, handheld, computer built-in, or vehicle-mounted mobile apparatus that exchanges voice and/or data with the radio access network, for example, a device such as a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The wireless terminal may also be referred to as a system, a subscriber unit (subscriber unit, SU), a subscriber station (subscriber station, SS), a mobile station (mobile station, MB), a remote station (remote station, RS), an access point (access point, AP), a remote terminal (remote terminal, RT), an access terminal (access terminal, AT), a user terminal (user terminal, UT), or a user agent (user agent, UA).

The terminal device may alternatively be a mobile phone, a tablet computer, a computer having a wireless transceiver function, a virtual reality terminal device, an augmented reality terminal device, a wireless terminal in industrial control, a wireless terminal in self-driving, a wireless terminal in remote surgery, a wireless terminal in a smart grid, a wireless terminal in transportation safety, a wireless terminal in a smart city, a wireless terminal in smart home, or the like. A specific technology and a specific device form that are used by the terminal device are not limited in embodiments of this application.

The network device and the terminal device may be deployed on the land, including an indoor device, an outdoor device, a handheld device, or a vehicle-mounted device; may be deployed on the water surface; or may be deployed on a plane, a balloon, and an artificial satellite in the air.

To understand the solutions of this application, the following first briefly describes terms that may be used in embodiments of this application.

RRC states of a UE include three types: an RRC connected (connected) state, an RRC idle (idle) state, and an RRC inactive (inactive) state.

RRC connected state: An RRC connection is established between a UE and a network to perform data transmission.

RRC idle (idle) state: No RRC connection is established between the UE and the network, and a base station does not have a context of the UE. If the UE needs to enter the RRC connected state from the RRC idle state, the UE needs to initiate an RRC connection establishment process.

RRC inactive state: also referred to as an RRC deactivated state. The UE enters the RRC connected state previously, and then the base station releases the RRC connection, but the base station and the UE store the context. If the UE needs to enter the RRC connected state from the RRC deactivated state, the UE needs to initiate an RRC connection resume process. Compared with the RRC establishment process, the RRC resume process has a shorter delay and low signaling overheads. However, a base station side needs to store the context of the UE, which occupies more storage overheads.

MDT, also referred to as a minimization of drive tests technology. A basic idea of the technology is that an operator uses a commercial terminal of a subscribed user to perform measurement and reporting to partially replace conventional drive test work, to automatically collect terminal measurement data, and detect and optimize a problem and a fault in a wireless network. Application scenarios of the technology are as follows: The operators usually perform routine network coverage drive tests every month, and also perform some call quality drive tests in specific areas to address user complaints, where MDT may be used to replace the drive tests in these scenarios.

The MDT may include logged (logged) MDT and immediate (immediate) MDT. The immediate MDT is mainly for measurement performed on a UE in an RRC connected state, and the logged MDT is mainly for measurement performed on a UE in an RRC idle state or a UE in an RRC inactive state. The immediate MDT may be used to measure a data amount, an IP throughput, a packet transmission delay, a packet loss rate, a processing delay, and the like of the UE; and the logged MDT may be used by the UE to measure a received signal strength.

Embodiments of this application may be applied to some scenarios of continuous measurement data of a UE in across RRC states, for example, training or inference based on an AI model. AI performs complex computing by simulating human brains. With improvement of data storage and computing capabilities, the AI is increasingly used. For example, the AI may be applied to NR to intelligently collect and analyze data, so that network performance and user experience can be improved. The AI may be applied to the following scenarios: network energy-saving, load balancing, mobility optimization, and the like.

Currently, training or inference based on the AI model is mainly performed on a network device side (for example, a base station or OAM). AI model input and feedback require the continuous measurement data of the UE across the RRC states. Currently, the continuous measurement data of the UE may be collected in an MDT manner.

Specific MDT configuration delivery and MDT data reporting for UEs in different RRC states are as follows:
(1) When the UE is in the RRC connected state, a delivery path of an MDT configuration may be: OAM to a 5GC to a gNB to the UE, where the MDT configuration may include an immediate MDT configuration and a logged MDT configuration. The UE and gNB may perform measurement based on the immediate MDT configuration. The gNB collects measurement data and sends the measurement data to a terminal control element (terminal control element, TCE).
(2) When the UE enters the RRC idle state from the RRC connected state or the RRC inactive state, the UE, the gNB, and the 5GC release the immediate MDT configuration.
(3) When the UE is in the RRC idle state, the UE performs measurement based on the logged MDT configuration stored in the RRC connected state, and perform storage locally in a log form.
(4) When the UE enters the RRC connected state or the RRC inactive state again from the RRC idle state, the UE indicates, to the gNB, MDT log available (MDT log available), and the gNB requests logged MDT data from the UE.

However, when the UE enters the RRC connected state or the RRC inactive state again from the RRC idle state, because the OAM does not sense the RRC state of the UE, the OAM does not send the immediate MDT configuration of the UE to the gNB through the 5GC again. In addition, when the UE is in the RRC idle state, the UE, the gNB, and the 5GC have released the immediate MDT configuration used when the UE is in the RRC connected state or the RRC inactive state last time. Therefore, the gNB cannot deliver, to the UE again, the immediate MDT configuration used when the UE is in the RRC connected state or the RRC inactive state last time. As a result, the gNB cannot obtain the continuous measurement data of the UE.

This application provides a communication method, so that a gNB may obtain continuous measurement data of a UE.

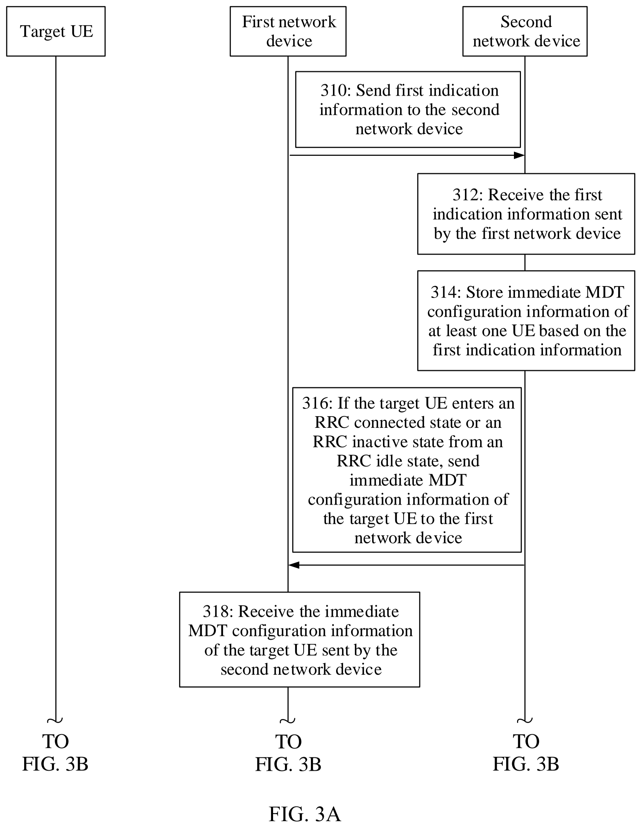

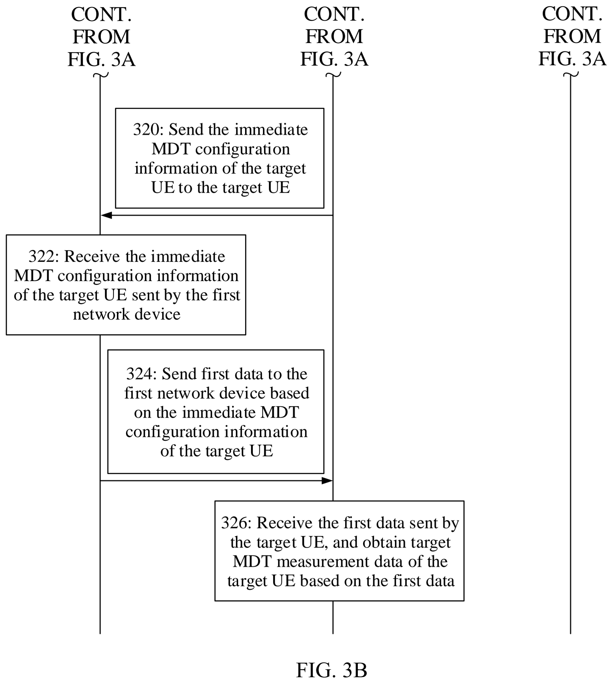

FIG. 3A and FIG. 3B are a diagram of a communication method according to an embodiment of this application. The method may be performed by a first network device, a second network device, and a terminal device. The method may include steps 310 to 326.

310: The first network device sends first indication information to the second network device, where the first indication information indicates the second network device to store immediate MDT configuration information of at least one terminal device UE, and the immediate MDT configuration information is used by the at least one UE to perform measurement for MDT data.

In this embodiment of this application, the first network device may be a gNB, and the second network device may be a 5GC; or the first network device may be another access network device, and the second network device may be another core network device. This is not limited.

312: The second network device receives the first indication information sent by the first network device.

314: The second network device stores the immediate MDT configuration information of the at least one UE based on the first indication information.

In this embodiment of this application, that the second network device stores the immediate MDT configuration information of the at least one UE based on the first indication information may be understood as follows: The second network device may store the immediate MDT configuration information of the at least one UE after receiving the first indication information.

The at least one UE in this embodiment of this application may include one or more UEs. If the first indication information indicates the second network device to store immediate MDT configuration information of a UE, the second network device may store the immediate MDT configuration information of the UE after receiving the first indication information. If the first indication information indicates the second network device to store immediate MDT configuration information of 10 UEs, the second network device may store the immediate MDT configuration information of the 10 UEs after receiving the first indication information.

316: If a target UE enters an RRC connected state or an RRC inactive state from an RRC idle state, the second network device sends immediate MDT configuration information of the target UE to the first network device, where the target UE is one of the at least one UE.

The target UE in this embodiment of this application may be one of the at least one UE. For example, if the at least one UE includes one UE, and the UE enters the RRC connected state or the RRC inactive state from the RRC idle state, the second network device may send immediate MDT configuration information of the UE to the first network device. If the at least one UE includes 10 UEs, which are respectively a UE 1, a UE 2, a UE 3, a UE 4, a UE 5, a UE 6, a UE 7, a UE 8, a UE 9, and a UE 10, and one of the UEs (for example, the UE 5) enters the RRC connected state or the RRC inactive state from the RRC idle state, the second network device may send immediate MDT configuration information of the UE 5 to the first network device.

318: The first network device receives the immediate MDT configuration information of the target UE sent by the second network device.

320: The first network device sends the immediate MDT configuration information of the target UE to the target UE.

322: The target UE receives the immediate MDT configuration information of the target UE sent by the first network device, where the immediate MDT configuration information of the target UE is used by the target UE to perform measurement for MDT data.

324: The target UE sends first data to the first network device based on the immediate MDT configuration information of the target UE, where the first data includes first MDT measurement data obtained by the target UE and data needed by the first network device to obtain second MDT measurement data.

326: The first network device receives the first data sent by the target UE, and obtains target MDT measurement data of the target UE based on the first data.

The first data in this embodiment of this application includes the first MDT measurement data obtained by the target UE and the data needed by the first network device to obtain the second MDT measurement data. The first MDT measurement data may be MDT measurement data obtained by the target UE based on a part of the immediate MDT configuration information of the target UE, for example, downlink signal quality (including a reference signal received power (reference signal received power, RSRP)/reference signal received quality (reference signal received quality, RSRQ)/a signal to interference plus noise ratio (signal to interference plus noise ratio, SINR) and the like), power headroom, a downlink delay, and other data. The data needed by the first network device to obtain the second MDT measurement data may be understood as that the data may be used by the first network device to obtain the second MDT measurement data based on the part of the immediate MDT configuration information of the target UE. In other words, the first network device may obtain the second MDT measurement data (such as an uplink packet delay and a quantity of activated UEs in a connected state) based on the data (such as an uplink PDCP average packet delay, an air interface average packet delay, and an RLC average packet delay) and the part of the immediate MDT configuration information of the target UE. In this case, the first MDT measurement data and the second MDT measurement data may be continuous measurement data of the target UE that needs to be collected by the first network device, that is, the target MDT measurement data in this embodiment of this application.

In the solution provided in this embodiment of this application, the first network device sends, to the second network device, the first indication information indicating the second network device to store the immediate MDT configuration information of the at least one UE, and the second network device stores the immediate MDT configuration information of the at least one UE based on the first indication information. When the target UE enters the RRC connected state or the RRC inactive state from the RRC idle state, the second network device may send the immediate MDT configuration information of the target UE to the target UE via the first network device because the second network device stores the immediate MDT configuration information of the at least one UE, and the target UE may send the first data to the first network device based on the MDT configuration information of the target UE, so that the first network device may obtain the target MDT measurement data of the target UE based on the first data, that is, may obtain the continuous measurement data of the target UE. Particularly, if the immediate MDT configuration information of the UE is used for AI training, inference or training accuracy of an AI model deployed on the first network device may be further improved.

As mentioned in step 310 above, the first network device may send the first indication information to the second network device. In an implementation process, the first network device may send the first indication information to the second network device on different occasions. For details, refer to the following.

Optionally, in some embodiments, the sending the first indication information to the second network device includes:
sending the first indication information to the second network device if detecting that the at least one UE enters the RRC idle state, or receiving the immediate MDT configuration information of the at least one UE.

In this embodiment of this application, that the first network device sends the first indication information to the second network device may include the following implementations.

### Implementation 1:

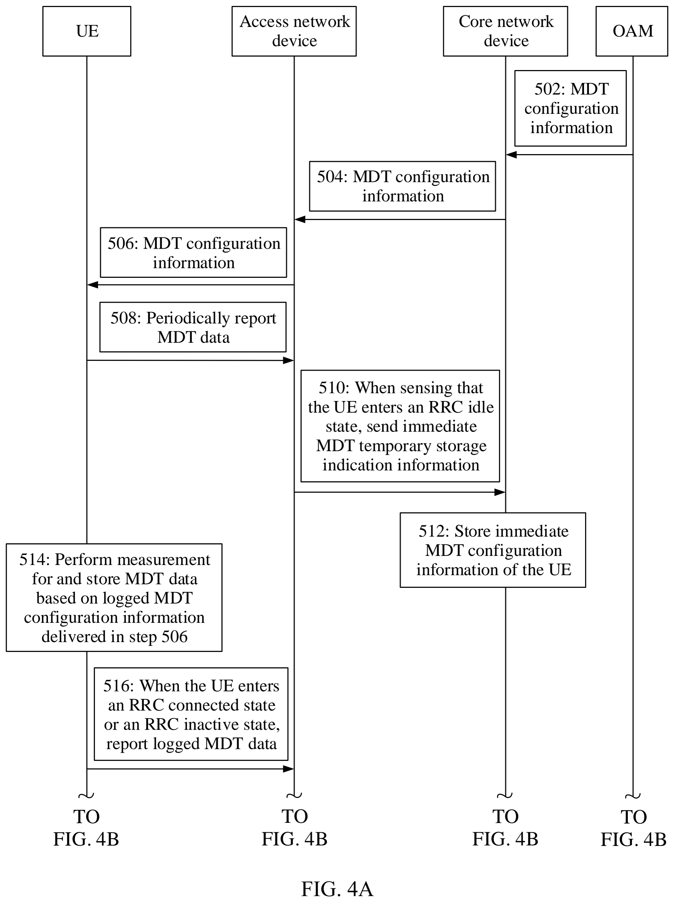

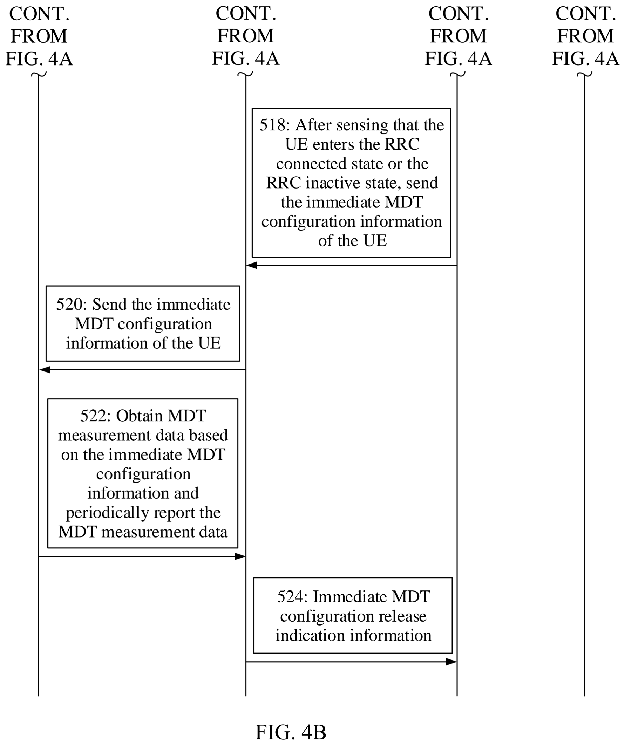

The first network device may send the first indication information to the second network device if the first network device detects that the at least one UE enters the RRC idle state. For example, the first network device may send the first indication information to the second network device if the first network device detects that the UE 1 and the UE 2 enter the RRC idle state, where the first indication information indicates the second network device to store immediate MDT configuration information of the two UEs: the UE 1 and the UE 2. For a specific process, refer to FIG. 4A and FIG. 4B below. Details are not described herein.

It should be noted that in this implementation, the first network device may receive immediate MDT configuration information of more UEs. For example, the first network device receives immediate MDT configuration information of five UEs: the UE 1, the UE 2, the UE 3, the UE 4, and the UE 5. When the first network device detects that the UE 1 and the UE 2 enter the RRC idle state, the first network device may send the first indication information to the second network device, where the first indication information indicates the second network device to store the immediate MDT configuration information of the two UEs: the UE 1 and the UE 2, and does not indicate to store the immediate MDT configuration information of the five UEs.

### Implementation 2:

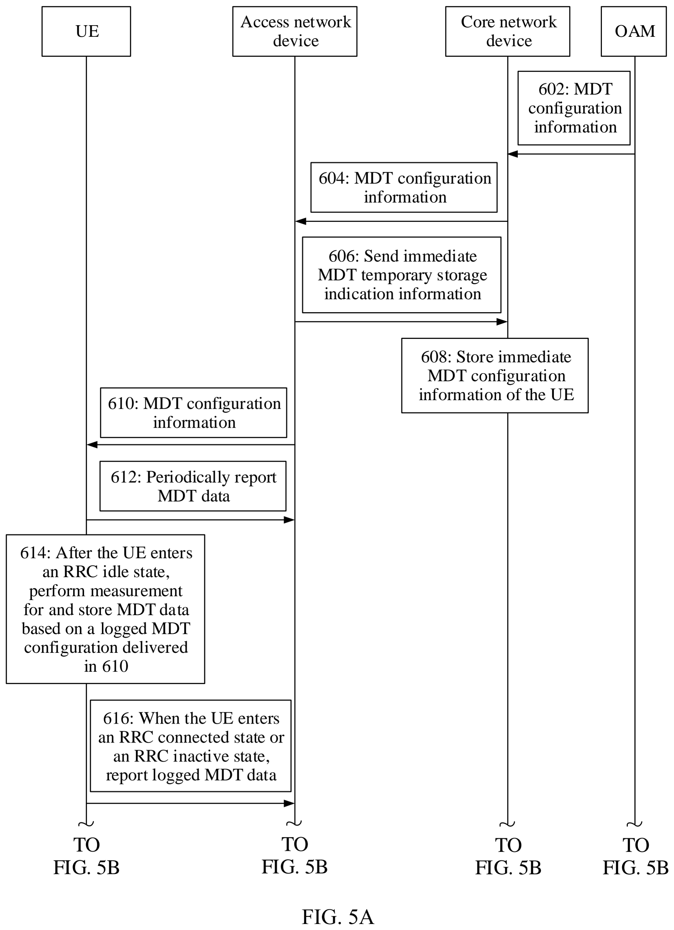

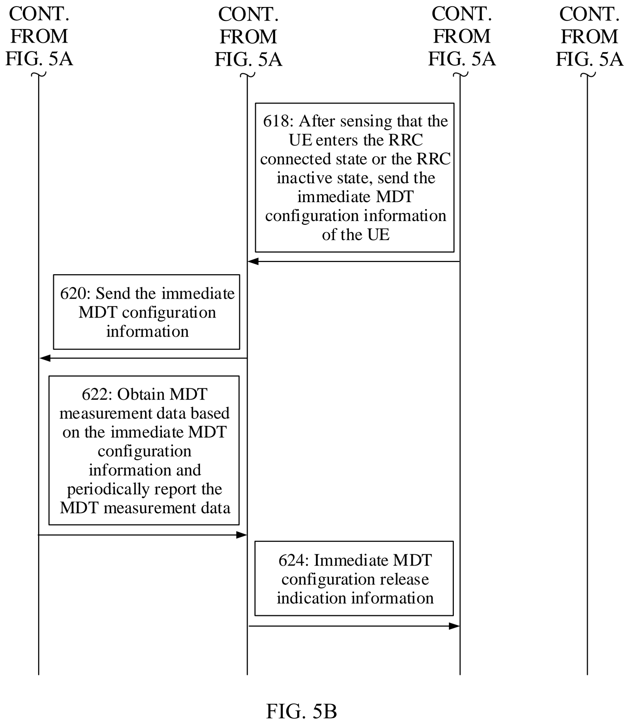

The first network device may send the first indication information to the second network device if the first network device receives the immediate MDT configuration information of the at least one UE. For example, the first network device may send the first indication information to the second network device if the first network device receives immediate MDT configuration information of five UEs: the UE 1, the UE 2, the UE 3, the UE 4, and the UE 5, where the first indication information indicates the second network device to store the immediate MDT configuration information of the five UEs: the UE 1, the UE 2, the UE 3, the UE 4, and the UE 5. This implementation is unrelated to an RRC state of the UE. Generally, provided that the first network device receives the immediate MDT configuration information of the UE, the first network device may send the first indication information to the second network device, to indicate the second network device to store the immediate MDT configuration information of the UE. For a specific process, refer to FIG. 5A and FIG. 5B below. Details are not described herein.

In the solution provided in this embodiment of this application, if the first network device detects that the at least one UE enters the RRC idle state, the first network device may send the first indication information to the second network device, and the second network device may store the immediate MDT configuration information of the at least one UE based on the first indication information. In this case, it can be avoided that the immediate MDT configuration information of the at least one UE is released because the UE enters the RRC idle state. Alternatively, if the first network device receives the immediate MDT configuration information of the at least one UE, the first network device may send the first indication information to the second network device, and the second network device may store the immediate MDT configuration information of the at least one UE based on the first indication information. In this case, the RRC state of the UE is not considered. If the first network device receives the immediate MDT configuration information of the at least one UE, the first network device may send the first indication information to the second network device. When the target UE enters the RRC connected state or the RRC inactive state from the RRC idle state, the second network device may send the immediate MDT configuration information of the target UE to the target UE via the first network device because the second network device stores the immediate MDT configuration information of the at least one UE, and the target UE may send the first data to the first network device based on the MDT configuration information of the target UE, so that the first network device may obtain the target MDT measurement data of the target UE based on the first data, that is, may obtain the continuous measurement data of the target UE.

Optionally, in some possible implementations, the immediate MDT configuration information includes at least one of the following:
an MDT activation type, an MDT area scope, MDT-based signaling of a public land mobile network (public land mobile network, PLMN) list, an identifier of the first network device, an identifier of the at least one UE, immediate MDT configuration temporary storage duration, and an immediate MDT configuration temporary storage indication.

The MDT activation type in this embodiment of this application may include: immediate MDT only (immediate MDT only), logged MDT only (logged MDT only), immediate MDT and trace (immediate MDT and trace), and the like.

The MDT area scope indicates an area in which MDT data collection should be performed, including a cell list, a tracking area list, and a tracking area identifier list.

The MDT-based signaling of the PLMN list includes an allowed PLMN list supported by a signaling-based MDT mechanism.

The identifier of the first network device may indicate, to another device, to distinguish between first network devices. The identifier of the at least one UE may indicate, to another device, to distinguish between different UEs.

The immediate MDT configuration temporary storage duration indicates duration for which a node stores the immediate MDT configuration, and a specific parameter value depends on internal implementation of the first network device. The immediate MDT configuration temporary storage indication indicates a node to store the immediate MDT configuration, and may be 1 bit, or may be indicated by the first indication information.

Optionally, in some embodiments, the sending the immediate MDT configuration information of the target UE to the first network device includes:
sending the immediate MDT configuration information of the target UE to the first network device based on the first indication information and an identifier of the target UE.

In this embodiment of this application, the second network device may send the immediate MDT configuration information of the target UE to the first network device based on the first indication information and the identifier of the target UE. For example, it is assumed that the second network device stores immediate MDT configuration information of five UEs, for example, immediate MDT configuration information of five UEs: the UE 1, the UE 2, the UE 3, the UE 4, and the UE 5, and immediate MDT configuration information of each UE includes an identifier of the UE. When the second network device determines that the UE 1 enters the RRC connected state or the RRC inactive state from the RRC idle state, the second network device may determine immediate MDT configuration information of the UE 1 based on the identifier of the UE included in the immediate MDT configuration information of each UE, and send the immediate MDT configuration information of the UE 1 to the first network device.

In the solution provided in this embodiment of this application, the second network device may send the immediate MDT configuration information of the target UE to the first network device based on the first indication information and the identifier of the target UE, to ensure correctness of the immediate MDT configuration information of the target UE sent by the second network device to the first network device, and ensure that the first network device obtains the continuous measurement data of the target UE.

Optionally, in some embodiments, the immediate MDT configuration information of the at least one UE carries an MDT identifier or does not carry the MDT identifier, and the MDT identifier indicates the first network device to obtain continuous MDT measurement data of the at least one UE across RRC states; and
the method further includes:
determining whether the immediate MDT configuration information of the target UE carries the MDT identifier; and
if determining that the immediate MDT configuration information of the target UE carries the MDT identifier and the target UE does not need to provide the first data, sending second indication information to the second network device, where the second indication information indicates the second network device to release the immediate MDT configuration information of the target UE.

Correspondingly, the second network device receives the second indication information sent by the first network device, where the second indication information indicates the second network device to release the immediate MDT configuration information of the target UE; and
releases the immediate MDT configuration of the target UE based on the second indication information.

In this embodiment of this application, it is assumed that the at least one UE includes the 10 UEs, which are respectively the UE 1, the UE 2, the UE 3, the UE 4, the UE 5, the UE 6, the UE 7, the UE 8, the UE 9, and the UE 10, where immediate MDT configuration information of four UEs in the 10 UEs carries an MDT identifier. For example, immediate MDT configuration information of four UEs: the UE 1, the UE 2, the UE 3, and the UE 4 carries an MDT identifier. If the first network device determines, based on implementation, that the UE 1 does not need to provide the first data, the first network device may send the second indication information to the second network device. When receiving the second indication information, the second network device may release an immediate MDT configuration of the UE 1 based on the second indication information.

The MDT identifier in this embodiment of this application may be "#". In other words, if the immediate MDT configuration information of the UE includes a symbol "#", the first network device may determine that the immediate MDT configuration information of the UE carries the MDT identifier. Generally, the UE may send the first data to the first network device based on the immediate MDT configuration information of the UE, and the first network device obtains the target MDT measurement data of the UE based on the first data. In some possible cases, the first network device determines that the UE does not need to provide the first data. In this case, the first network device may send the second indication information to the second network device. After receiving the second indication information, the second network device may release the immediate MDT configuration information of the UE based on the second indication information.

For example, it is assumed that the MDT identifier specifically indicates a scenario in which the immediate MDT configuration of the UE is delivered for a purpose such as AI training, but the first network device determines that there is no AI training requirement, and the first network device may send the second indication information to the second network device.

It should be understood that the MDT identifier shown above is merely an example for description, and may alternatively be another symbol such as "1" or "*". This is not limited.

In the solution provided in this embodiment of this application, if the first network device determines that the immediate MDT configuration information of the target UE carries the MDT identifier and the target UE does not need to provide the first data, the first network device may send, to the second network device, the second indication information indicating the second network device to release the immediate MDT configuration information of the target UE, and the second network device may release the immediate MDT configuration information of the target UE based on the second indication information. This can decrease a possibility of an insufficient memory in the second network device, and increase a possibility that the second network device successfully stores immediate MDT configuration information of another UE.

Optionally, in some embodiments, the second indication information includes at least one of the following:
the identifier of the target UE, the identifier of the first network device, and an immediate MDT configuration release indication.

In this embodiment of this application, after receiving the second indication information sent by the first network device, the second network device may release the immediate MDT configuration of the target UE based on information included in the second indication information.

For example, it is assumed that the second network device stores immediate MDT configuration information of five UEs, for example, immediate MDT configuration information of the UE 1, immediate MDT configuration information of the UE 2, immediate MDT configuration information of the UE 3, immediate MDT configuration information of the UE4, and immediate MDT configuration information of the UE 5. If the second indication information includes the identifier of the target UE, the second network device may determine, based on the identifier of the target UE, a specific UE serving as the target UE in the five UEs. It is assumed that the target UE is the UE 1. The second network device may release the immediate MDT configuration information of the UE 1.

In some possible cases, a same UE may access different first network devices, and the different first network devices may send, to the second network device, information for storing immediate MDT configuration information of the UE. If the second indication information includes the identifier of the first network device, the second network device may subsequently determine the released immediate MDT configuration information based on the identifier of the first network device. For example, the first network device is a gNB. When the UE 1 accesses a gNB 1, the gNB 1 may send, to the second network device, information for storing the immediate MDT configuration information of the UE 1, and the second network device may store the immediate MDT configuration information of the UE 1. When the UE 1 accesses a gNB 2, the gNB 2 may also send, to the second network device, information for storing the immediate MDT configuration information of the UE 1, and the second network device may store the immediate MDT configuration information of the UE 1. If the second indication information includes an identifier of the gNB 1, the second network device may release, based on the identifier of the gNB 1, the immediate MDT configuration information of the UE 1 that is stored by the second network device when the UE 1 accesses the gNB 1.

The immediate MDT configuration release indication in this embodiment of this application indicates a node to release an MDT configuration, for example, indicates the second network device to release the immediate MDT configuration information of the target UE, and may be 1 bit, or may be indicated by the second indication information.

Optionally, in some embodiments, the storing the immediate MDT configuration information of the at least one UE based on the first indication information includes:
storing the immediate MDT configuration information of the at least one UE within preset duration based on the first indication information.

In this embodiment of this application, when storing the immediate MDT configuration information of the at least one UE, the second network device may store the immediate MDT configuration information of the at least one UE within the preset duration based on the first indication information. In other words, if the second network device receives the first indication information from the first network device, the second network device should store the immediate MDT configuration information of the at least one UE within the preset duration.

The preset duration in this embodiment of this application may be preconfigured, or may be specified in a protocol, or may be determined by the network device based on implementation. The preset duration may be a fixed value, or may be a value that dynamically changes. This is not limited.

If the preset duration is determined by the network device (for example, the 5GC) based on implementation, the preset duration varies with a storage size of the immediate MDT configuration information of the at least one UE and a memory storage status of the network device. For example, assuming that a memory of the network device can store information of a maximum of 100 G and information of 98 G has been stored currently, if the storage size of the immediate MDT configuration information of the at least one UE that needs to be stored by the network device currently is 10 G, the network device may release a part of stored immediate MDT configuration information of a UE, for example, earliest stored immediate MDT configuration information of a UE whose storage size is 8 G (or more), immediate MDT configuration information of a UE that does not trigger immediate MDT measurement for a long time (a storage size is 8 G or more), or immediate MDT configuration information of a UE that is detected not to enter the RRC connected state for a long time (a storage size is 8 G or more). In this case, the preset duration may include duration for which the network device releases the part of the stored immediate MDT configuration information of the UE and duration for the to-be-stored immediate MDT configuration information of the at least one UE, that is, duration for which the network device releases the stored immediate MDT configuration information of the UE whose storage size is 8 G (or more) and duration for the to-be-stored immediate MDT configuration information of the at least one UE whose storage size is 10 G.

If the storage size of the immediate MDT configuration information of the at least one UE that needs to be stored by the network device currently is 20 G, the network device may release a part of stored immediate MDT configuration information of a UE, for example, earliest stored immediate MDT configuration information of a UE whose storage size is 18 G (or more). In this case, the preset duration may include duration for which the network device releases the stored immediate MDT configuration information of the UE whose storage size is 18 G (or more) and duration for the to-be-stored immediate MDT configuration information of the at least one UE whose storage size is 20 G.

It should be understood that in the foregoing process, the network device may first release the part of the stored immediate MDT configuration information of the UE, and then store the to-be-stored immediate MDT configuration information of the at least one UE; or the network device stores the to-be-stored immediate MDT configuration information of the at least one UE when releasing the part of the stored immediate MDT configuration information of the UE. This is not limited.

In the solution provided in this embodiment of this application, when storing the immediate MDT configuration information of the at least one UE, the second network device may store the immediate MDT configuration information of the at least one UE within the preset duration, to improve efficiency of storing the immediate MDT configuration information of the at least one UE by the second network device, and help the first network device obtain the continuous measurement data of the target UE.

Optionally, in some embodiments, the method further includes:
if not successfully storing the immediate MDT configuration information of the at least one UE within the preset duration, sending third indication information to the first network device and/or a third network device, where the third indication information indicates a failure in storing the immediate MDT configuration information of the at least one UE and a cause of the failure in storing the immediate MDT configuration information of the at least one UE.

The third network device in this embodiment of this application may be OAM.

In this embodiment of this application, assuming that the second network device should store the immediate MDT configuration information of the 10 UEs within the preset duration, but the second network device fails to store the immediate MDT configuration information of the 10 UEs within the preset duration, the second network device may send the third indication information to the first network device and/or the third network device, where the third indication information indicates a failure in storing the immediate MDT configuration information of the 10 UEs and a cause of the failure in storing the immediate MDT configuration information of the 10 UEs.

The cause of the failure in storing the immediate MDT configuration information of the 10 UEs may be that the second network device has an insufficient memory, or a cause in another aspect. This is not limited.

In some possible implementations, assuming that the second network device should store the immediate MDT configuration information of the 10 UEs within the preset duration, but the second network device stores immediate MDT configuration information of 6 UEs within the preset duration, and fails to store immediate MDT configuration information of 4 UEs within the preset duration, the second network device may send the third indication information to the first network device and/or the third network device, where the third indication information indicates a failure in storing the immediate MDT configuration information of the remaining 4 UEs and a cause of the failure in storing the immediate MDT configuration information of the 4 UEs.

In this embodiment of this application, if the second network device sends the third indication information to the first network device and/or the third network device, where the third indication information indicates the failure in storing the immediate MDT configuration information of the at least one UE and the cause of the failure in storing the immediate MDT configuration information of the at least one UE. For the first network device, the first network device knows that the second network device cannot continue to store the immediate MDT configuration information of the UE currently, and the first network device may request another device to store the immediate MDT configuration information of the at least one UE. For the second network device, if the second network device cannot continue to store the immediate MDT configuration information of the UE currently because of the insufficient memory, the second network device may release a part of stored immediate MDT configuration information of the UE, to ensure that the immediate MDT configuration information of the UE can continue to be stored subsequently.

In the solution provided in this embodiment of this application, if not successfully storing the immediate MDT configuration information of the at least one UE within the preset duration, the second network device may send the third indication information to the first network device and/or the third network device, where the third indication information indicates the failure in storing the immediate MDT configuration information of the at least one UE and the cause of the failure in storing the immediate MDT configuration information of the at least one UE. In this way, the first network device knows that the second network device cannot continue to store the immediate MDT configuration information of the UE currently, and the first network device may request the another device to store the immediate MDT configuration information of the at least one UE. For the second network device, if the second network device cannot continue to store the immediate MDT configuration information of the UE currently because of the insufficient memory, the second network device may release the part of the stored immediate MDT configuration information of the UE, to ensure that the immediate MDT configuration information of the UE can continue to be stored subsequently, and increase a success rate of storing the immediate MDT configuration information of the UE.

FIG. 4A and FIG. 4B are a diagram of a communication method according to an embodiment of this application. The method corresponds to the foregoing implementation 1, and the method may include steps 502 to 524.

502: OAM sends MDT configuration information to a core network device.

504: The core network device sends the MDT configuration information to an access network device.

506: The access network device sends the MDT configuration information to a UE.

The access network device may be the foregoing first network device, for example, a gNB. The core network device may be the foregoing second network device, for example, a 5GC. The core network device may be one or more devices in a 5G core network. The MDT configuration information may include immediate MDT configuration and logged MDT configuration information.

508: The UE periodically reports MDT data to the access network device.

In this case, the UE may store the logged MDT configuration information of the UE, and perform measurement for the MDT data based on the immediate MDT configuration information.

The UE in the foregoing steps 502 to 508 is equivalent to the at least one UE in FIG. 3A and FIG. 3B, and the UE in the following steps 510 to 520 is equivalent to the target UE in FIG. 3A and FIG. 3B.

510: The access network device senses that the UE enters an RRC idle state, and sends immediate MDT temporary storage indication information to the core network device.

The immediate MDT temporary storage indication information is equivalent to the first indication information described above, and indicates the core network device to temporarily store the immediate MDT configuration information of the UE.

In this embodiment of this application, when the access network device senses that the UE enters the RRC idle state, before the core network device releases a context of the UE (including the immediate MDT configuration information of the UE), the access network device may send the immediate MDT temporary storage indication information to the core network device.

512: The core network device stores the immediate MDT configuration information of the UE.

In this embodiment of this application, the core network device may store the immediate MDT configuration information of the UE based on the immediate MDT temporary storage indication information in step 510.

When storing the immediate MDT configuration information of the UE, the core network device may store the immediate MDT configuration information of the UE within preset duration. If the core network device fails to store the immediate MDT configuration information of the UE within the preset duration, the core network device may indicate, to the access network device or the OAM, a failure in storing an MDT configuration and a cause of the failure in storing the MDT configuration.

514: The UE performs measurement for and stores MDT data based on the logged MDT configuration information delivered in step 506.

516: After the UE enters an RRC connected state or an RRC inactive state, the UE reports logged MDT data to the access network device.

After entering the RRC connected state or the RRC inactive state, the UE may indicate, to the access network device, MDT log available, the access network device requests the logged MDT data from the UE, and the UE may report the logged MDT data to the access network device.

518: After the core network device senses that the UE enters the RRC connected state or the RRC inactive state, the core network device sends the immediate MDT configuration information of the UE to the access network device.

Specifically, after sensing that the UE enters the RRC connected state or the RRC inactive state, the core network device may retrieve the immediate MDT configuration information stored in step 512, determine the immediate MDT configuration information of the UE based on an identifier of the UE, and send the immediate MDT configuration information of the UE to the access network device.

Optionally, in some implementations, after the core network device sends the immediate MDT configuration information of the UE to the access network device, the core network device may release previously temporarily stored immediate MDT configuration information of the UE.

Optionally, in some possible implementations, the immediate MDT configuration information may further carry an MDT identifier indicating to the access network device that continuous MDT measurement data of the UE across RRC states may be obtained based on the immediate MDT configuration information that carries the MDT identifier.

520: The access network device sends the immediate MDT configuration information of the UE to the UE.

522: The UE obtains MDT measurement data based on the immediate MDT configuration information of the UE, and periodically reports the MDT measurement data to the access network device.

It may be understood that the MDT measurement data in step 522 is the first MDT measurement data in the foregoing method 300.

In addition, the UE may further send, to the access network device, data needed by the access network device to obtain second MDT measurement data, so that the access network device may obtain the continuous measurement data of the UE based on the MDT measurement data reported by the UE in step 522 and the data that is sent by the UE and needed by the access network device to obtain the second MDT measurement data.

524: The access network device sends immediate MDT configuration release indication information to the core network device.

The immediate MDT configuration release indication information is equivalent to the second indication information described above, and indicates the core network device to release the immediate MDT configuration information of the UE.

As mentioned above, the immediate MDT configuration information of the UE may carry the MDT identifier. For example, the identifier may indicate to the access network device that the immediate MDT configuration is delivered for a purpose such as AI training. When the access network device determines, based on implementation, that the UE does not need to provide MDT measurement data (for example, there is no AI training requirement), the access network device may send the immediate MDT configuration release indication information to the core network device, to indicate the core network device to release the immediate MDT configuration information of the UE.

It may be understood that, if the core network device does not store the MDT configuration during trace activation (trace activation), the MDT identifier (for example, 1 bit) may be added in step 520 and step 504, to indicate to the access network device that the continuous MDT measurement data of the UE across the RRC states may be obtained (for example, may indicate to the access network device that the MDT configuration is delivered for the purpose such as the AI training). The access network device senses that the UE enters the RRC idle state, and before the core network device releases the context of the UE, the access network device sends the immediate MDT configuration temporary storage indication information to the core network device in step 510, and the core network device temporarily stores, in step 512, the immediate MDT configuration information of the UE indicated in step 510.

If the core network device stores the MDT configuration during trace activation, the MDT identifier (for example, 1 bit) may be added in step 502, to indicate to the access network device that the continuous MDT measurement data of the UE across the RRC states may be obtained (for example, may indicate to the access network device that the MDT configuration is delivered for the purpose such as the AI training). When sensing that the UE enters the RRC idle state, the core network device temporarily stores, in step 510, the immediate MDT configuration information of the UE with the MDT identifier in 502.

In the solution provided in this embodiment of this application, the access network device indicates the core network device to temporarily store the immediate MDT configuration information of the UE when the UE enters the RRC idle state. Subsequently, the UE enters the RRC connected state or the RRC inactive state from the RRC idle state. The core network device may send the immediate MDT configuration information of the UE to the UE via the access network device, and the UE may report data to the access network device based on the immediate MDT configuration information, so that the access network device can collect continuous data of the UE across RRC states. Particularly, when the MDT configuration is delivered for the purpose such as the AI training, inference or training accuracy of an AI model deployed on the access network device or the OAM may be further improved.

FIG. 5A and FIG. 5B are a diagram of a communication method according to an embodiment of this application. The method corresponds to the foregoing implementation 2, and the method may include steps 602 to 624.

602: OAM sends MDT configuration information to a core network device.

604: The core network device sends the MDT configuration information to an access network device.

The access network device may be the foregoing first network device, for example, a gNB. The core network device may be the foregoing second network device, for example, a 5GC. The core network device may be one or more devices in a 5G core network. The MDT configuration information may include immediate MDT configuration and logged MDT configuration information.

606: The access network device sends immediate MDT temporary storage indication information to the core network device.

The immediate MDT temporary storage indication information is equivalent to the first indication information described above, and indicates the core network device to temporarily store immediate MDT configuration information of a UE.

In this embodiment of this application, when the access network device receives the MDT configuration information of the UE, before the core network device releases a context of the UE (including the immediate MDT configuration information of the UE), the access network device may send the immediate MDT temporary storage indication information to the core network device.

608: The core network device stores the immediate MDT configuration information of the UE.

In this embodiment of this application, the core network device may store the immediate MDT configuration information of the UE based on the immediate MDT temporary storage indication information in step 606.

When storing the immediate MDT configuration information of the UE, the core network device may store the immediate MDT configuration information of the UE within preset duration. If the core network device fails to store the immediate MDT configuration information of the UE within the preset duration, the core network device may indicate, to the access network device or the OAM, a failure in storing an MDT configuration and a cause of the failure in storing the MDT configuration.

610: The access network device sends the MDT configuration information to the UE.

612: The UE periodically reports MDT data to the access network device.

In this case, the UE may store logged MDT configuration information of the UE, and perform measurement for the MDT data based on the immediate MDT configuration information.

614: After the UE enters an RRC idle state, the UE performs measurement for and stores MDT data based on the logged MDT configuration information delivered in step 610.

616: After the UE enters an RRC connected state or an RRC inactive state, the UE reports logged MDT data to the access network device.

After entering the RRC connected state, the UE may indicate, to the access network device, MDT log available, the access network device requests the logged MDT data from the UE, and the UE may report the logged MDT data to the access network device.

618: After the core network device senses that the UE enters the RRC connected state or the RRC inactive state, the core network device sends the immediate MDT configuration information of the UE to the access network device.

Specifically, after sensing that the UE enters the RRC connected state or the RRC inactive state, the core network device may retrieve the immediate MDT configuration information stored in step 608, determine the immediate MDT configuration information of the UE based on an identifier of the UE, and send the immediate MDT configuration information of the UE to the access network device.

Optionally, in some implementations, after the core network device sends the immediate MDT configuration information of the UE to the access network device, the core network device may release previously temporarily stored immediate MDT configuration information of the UE.

Optionally, in some possible implementations, the immediate MDT configuration information may further carry an MDT identifier indicating to the access network device that continuous MDT measurement data of the UE across RRC states may be obtained based on the immediate MDT configuration information that carries the MDT identifier.

620: The access network device sends the immediate MDT configuration information of the UE to the UE.

622: The UE obtains MDT measurement data based on the immediate MDT configuration information of the UE, and periodically reports the MDT measurement data to the access network device.

It may be understood that the MDT measurement data in step 622 is the first MDT measurement data in the foregoing method 300.

In addition, the UE may further send, to the access network device, data needed by the access network device to obtain second MDT measurement data, so that the access network device may obtain the continuous measurement data of the UE based on the MDT measurement data reported by the UE in step 622 and the data that is sent by the UE and needed by the access network device to obtain the second MDT measurement data.

624: The access network device sends immediate MDT configuration release indication information to the core network device.

The immediate MDT configuration release indication information is equivalent to the second indication information described above, and indicates the core network device to release the immediate MDT configuration information of the UE.

As mentioned above, the immediate MDT configuration information of the UE may carry the MDT identifier. For example, the identifier may indicate to the access network device that the immediate MDT configuration is delivered for a purpose such as AI training. When the access network device determines, based on implementation, that the UE does not need to provide MDT measurement data (for example, there is no AI training requirement), the access network device may send the immediate MDT configuration release indication information to the core network device, to indicate the core network device to release the immediate MDT configuration information of the UE.

It may be understood that, in a scenario in which the OAM collects the continuous measurement data of the UE, the OAM determines specific UEs whose continuous measurement data needs to be collected. In this case, the MDT identifier (for example, 1 bit) may be added in step 602, to indicate to the access network device that the continuous MDT measurement data of the UE across the RRC states may be obtained (for example, may indicate to the access network device that the MDT configuration is delivered for the purpose such as the AI training). The core network device temporarily stores, in step 608, the immediate MDT configuration information of the UE indicated in step 606.

In the solution provided in this embodiment of this application, after receiving the immediate MDT configuration information of the UE, the access network device may indicate the core network device to temporarily store the immediate MDT configuration information of the UE. Subsequently, the UE enters the RRC connected state or the RRC inactive state from the RRC idle state. The core network device may send the immediate MDT configuration information of the UE to the UE via the access network device, and the UE may report data to the access network device based on the immediate MDT configuration information, so that the access network device can collect continuous data of the UE across RRC states. Particularly, when the MDT configuration is delivered for the purpose such as the AI training, inference or training accuracy of an AI model deployed on the access network device or the OAM may be further improved.

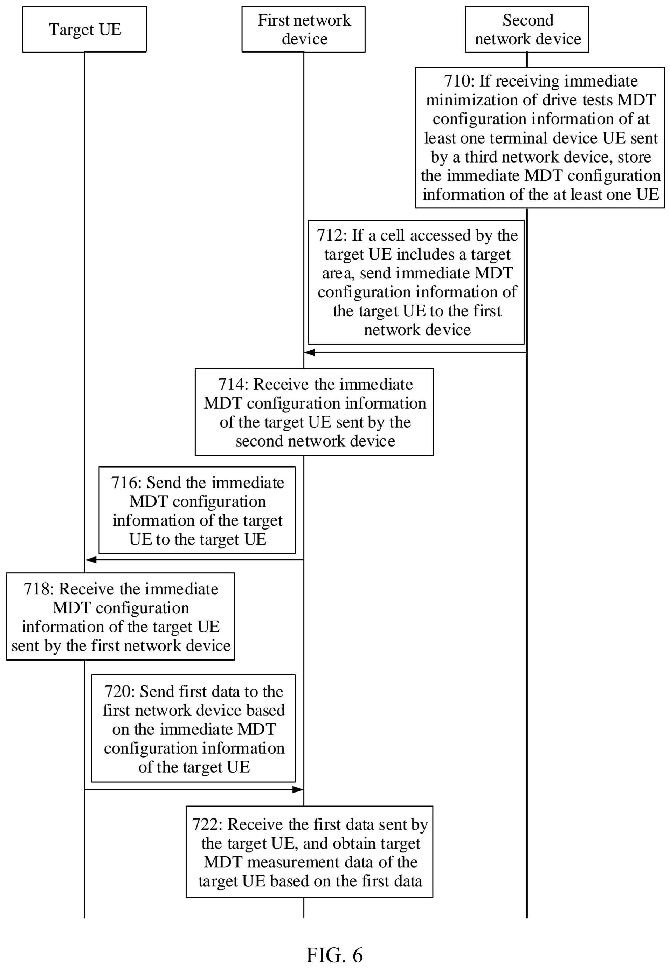

FIG. 6 is a diagram of a communication method according to an embodiment of this application. The method may include steps 710 to 722.

710: If receiving immediate MDT configuration information of at least one UE sent by a third network device, a second network device stores the immediate MDT configuration information of the at least one UE.

In this embodiment of this application, the third network device may be OAM, the second network device may be a 5GC, and the first network device may be a gNB.

When the second network device receives the immediate MDT configuration information of the at least one UE sent by the third network device, the second network device may store the immediate MDT configuration information of the at least one UE, where "store" herein may be understood as "store by default".

712: When a cell accessed by a target UE includes a target area, the second network device sends immediate MDT configuration information of the target UE to the first network device, where the target UE is one of the at least one UE, and the target area is in an MDT tracking area included in the immediate MDT configuration information of the target UE.

In this embodiment of this application, the immediate MDT configuration information of the target UE may include the MDT tracking area. If the cell accessed by the target UE is included in the MDT tracking area, the second network device may send the immediate MDT configuration information of the target UE to the first network device.

714: The first network device receives the immediate MDT configuration information of the target UE sent by the second network device.

716: The first network device sends the immediate MDT configuration information of the target UE to the target UE.

718: The target UE receives the immediate MDT configuration information of the target UE sent by the first network device, where the immediate MDT configuration information of the target UE is used by the target UE to perform measurement for MDT data.

720: The target UE sends first data to the first network device based on the immediate MDT configuration information of the target UE, where the first data includes first MDT measurement data obtained by the target UE and data needed by the first network device to obtain second MDT measurement data.

722: The first network device receives the first data sent by the target UE, and obtains target MDT measurement data of the target UE based on the first data.

In the solution provided in this embodiment of this application, when the second network device receives the immediate MDT configuration information of the at least one UE sent by the third network device, the second network device may store the immediate MDT configuration information of the at least one UE. When the cell accessed by the target UE includes the target area, the second network device may send the immediate MDT configuration information of the target UE to the target UE via the first network device because the second network device stores the immediate MDT configuration information of the at least one UE, and the target UE may send the first data to the first network device based on the MDT configuration information of the target UE, so that the first network device may obtain the target MDT measurement data of the target UE based on the first data, that is, may obtain continuous measurement data of the target UE. Particularly, when the MDT configuration is delivered for the purpose such as the AI training, inference or training accuracy of an AI model deployed on the gNB or the OAM may be further improved.

Optionally, in some embodiments, the immediate MDT configuration information includes at least one of the following:
an MDT activation type, an MDT area scope, MDT-based signaling of a PLMN list, an identifier of the first network device, an identifier of the at least one UE, immediate MDT configuration temporary storage duration, and an immediate MDT configuration temporary storage indication.

Optionally, in some embodiments, the sending the immediate MDT configuration information of the target UE to the first network device includes:
sending the immediate MDT configuration information of the target UE to the first network device based on an identifier of the target UE.

Optionally, in some embodiments, the immediate MDT configuration information of the at least one UE carries an MDT identifier or does not carry the MDT identifier, and the MDT identifier indicates the first network device to obtain continuous MDT measurement data of the at least one UE across RRC states; and
the method further includes:
determining whether the immediate MDT configuration information of the target UE carries the MDT identifier; and
if determining that the immediate MDT configuration information of the target UE carries the MDT identifier and the target UE does not need to provide the first data, sending second indication information to the second network device, where the second indication information indicates the second network device to release the immediate MDT configuration information of the target UE.

Correspondingly, the second network device receives the second indication information sent by the first network device, and releases the immediate MDT configuration information of the target UE based on the second indication information.

Optionally, in some embodiments, the second indication information includes at least one of the following:
the identifier of the target UE, the identifier of the first network device, and an immediate MDT configuration release indication.

Optionally, in some embodiments, the storing the immediate MDT configuration information of the at least one UE includes:
storing the immediate MDT configuration information of the at least one UE within preset duration.

Optionally, in some embodiments, the method further includes:
if not successfully storing the immediate MDT configuration information of the at least one UE within the preset duration, sending third indication information to the first network device and/or a third network device, where the third indication information indicates a failure in storing the immediate MDT configuration information of the at least one UE and a cause of the failure in storing the immediate MDT configuration information of the at least one UE.

In this embodiment of this application, for a part that is not described in detail, refer to the foregoing related content. Details are not described herein again.

It should be noted that values in the foregoing embodiments are merely examples for description, and may alternatively be other values. This should not impose a special limitation on this application.

It should be understood that specific examples in the foregoing embodiments are merely intended to help a person skilled in the art better understand embodiments of this application, but are not intended to limit the scope of embodiments of this application. It should be further understood that sequence numbers of the foregoing processes do not mean a sequence of performing the processes. The sequence of performing the processes should be determined based on functions and internal logic of the processes, and should not be construed as any limitation on the implementation processes of embodiments of this application.

It should be further understood that in embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

It should be further understood that, in some of the foregoing embodiments, a device in an existing network architecture is mainly used as an example for description. It should be understood that, a specific form of the device is not limited in embodiments of this application. For example, all devices that can implement a same function in the future are applicable to embodiments of this application.

It may be understood that, in the foregoing method embodiments, a method and an operation implemented by a device (for example, the terminal device or the network device) may alternatively be implemented by a component (for example, a chip or a circuit) that can be used in the device.

The foregoing describes in detail the communication method provided in embodiments of this application. The foregoing communication method is mainly described from a perspective of interaction between the terminal device and the network device. It may be understood that, to implement the foregoing functions, the terminal device and the network device include corresponding hardware structures and/or software modules for performing the functions.

A person skilled in the art should be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

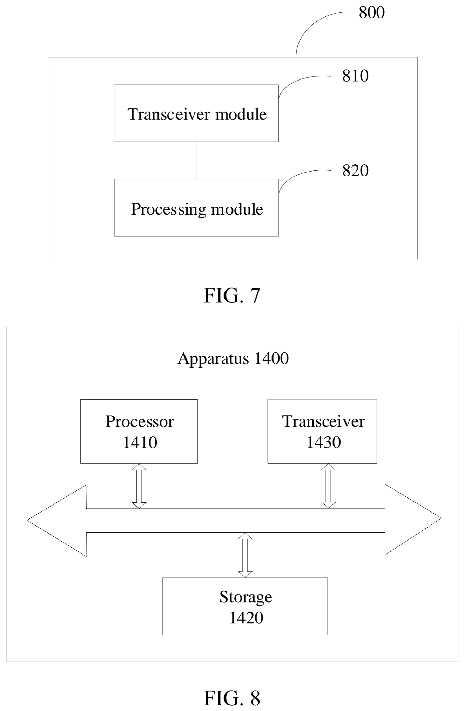

The following describes, with reference to FIG. 7 and FIG. 8, communication apparatuses provided in embodiments of this application. It should be understood that descriptions of apparatus embodiments correspond to the descriptions of the method embodiments. Therefore, for content that is not described in detail, refer to the foregoing method embodiments. For brevity, details of a part of content are not described herein again.

In embodiments of this application, the transmitter device or the receiver device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division during actual implementation. The following provides descriptions by using an example in which each functional module is obtained through division based on each corresponding function.

FIG. 7 is a block diagram of a communication apparatus 800 according to an embodiment of this application. The apparatus 800 includes a transceiver module 810 and a processing module 820. The transceiver module 810 may implement a corresponding communication function. The processing module 820 may be configured to process data. The transceiver module 810 may also be referred to as a communication interface or a communication module.

Optionally, the apparatus 800 may further include a storage module. The storage module may be configured to store instructions and/or data. The processing module may read the instructions and/or the data in the storage module, so that the apparatus implements the foregoing method embodiments.

The apparatus 800 may be configured to perform an action performed by the network device in the foregoing method embodiments. The transceiver module 810 is configured to perform a receiving/sending-related operation on a network device side in the foregoing method embodiments. The processing module 820 is configured to perform a processing-related operation on the network device side in the foregoing method embodiments. The apparatus 800 may be configured to perform an action performed by the terminal device in the foregoing method embodiments. The transceiver module 810 is configured to perform a receiving/sending-related operation on a terminal device side in the foregoing method embodiments. The processing module 820 is configured to perform a processing-related operation on the terminal device side in the foregoing method embodiments.

When the apparatus 800 is configured to implement a function of the first network device in the method embodiment in FIG. 3A and FIG. 3B, the transceiver module 810 is configured to send first indication information to a second network device, where the first indication information indicates the second network device to store immediate minimization of drive tests MDT configuration information of at least one terminal device UE, and the immediate MDT configuration information is used by the at least one UE to perform measurement for MDT data; receive immediate MDT configuration information of a target UE sent by the second network device, where the target UE is one of the at least one UE; send the immediate MDT configuration information of the target UE to the target UE; and receive first data sent by the target UE; and the processing module 820 is configured to obtain target MDT measurement data of the target UE based on the first data, where the first data includes first MDT measurement data obtained by the target UE and data needed by the first network device to obtain second MDT measurement data.

When the apparatus 800 is configured to implement a function of the second network device in the method embodiment in FIG. 3A and FIG. 3B, the transceiver module 810 is configured to receive first indication information sent by a first network device, where the first indication information indicates a second network device to store immediate minimization of drive tests MDT configuration information of at least one terminal device UE, and the immediate MDT configuration information is used by the at least one UE to perform measurement for MDT data; and the processing module 820 is configured to store the immediate MDT configuration information of the at least one UE based on the first indication information. The transceiver module 810 is further configured to: if a target UE enters a radio resource control RRC connected state or an RRC inactive state from an RRC idle state, send immediate MDT configuration information of the target UE to the first network device, where the target UE is one of the at least one UE.

When the apparatus 800 is configured to implement a function of the terminal device in the method embodiment in FIG. 3A and FIG. 3B, the transceiver module 810 is configured to receive immediate minimization of drive tests MDT configuration information of a target UE sent by a first network device, where the immediate MDT configuration information of the target UE is used by the target UE to perform measurement for MDT data; and send first data to the first network device based on the immediate MDT configuration information of the target UE, where the first data includes first MDT measurement data obtained by the target UE and data needed by the first network device to obtain second MDT measurement data.

When the apparatus 800 is configured to implement a function of the second network device in the method embodiment in FIG. 6, the processing module 820 is configured to: if receiving immediate minimization of drive tests MDT configuration information of at least one terminal device UE sent by a third network device, store the immediate MDT configuration information of the at least one UE; and the transceiver module 810 is configured to: when a cell accessed by a target UE includes a target area, send immediate MDT configuration information of the target UE to a first network device, where the target UE is one of the at least one UE, and the target area is in an MDT tracking area included in the immediate MDT configuration information of the target UE.

When the apparatus 800 is configured to implement a function of the first network device in the method embodiment in FIG. 6, the transceiver module 810 is configured to receive immediate minimization of drive tests MDT configuration information of a target terminal device UE sent by a second network device; send the immediate MDT configuration information of the target UE to the target UE; and receive first data sent by the target UE; and the processing module 820 is configured to obtain target MDT measurement data of the target UE based on the first data, where the first data includes first MDT measurement data obtained by the target UE and data needed by a first network device to obtain second MDT measurement data.

When the apparatus 800 is configured to implement a function of the terminal device in the method embodiment in FIG. 6, the transceiver module 810 is configured to receive immediate minimization of drive tests MDT configuration information of a target UE sent by a first network device, where the immediate MDT configuration information of the target UE is used by the target UE to perform measurement for MDT data; and send first data to the first network device based on the immediate MDT configuration information of the target UE, where the first data includes first MDT measurement data obtained by the target UE and data needed by the first network device to obtain second MDT measurement data.

The apparatus 800 may implement the steps or the procedures performed by the terminal device in the method embodiments according to embodiments of this application. The apparatus 800 may include modules configured to perform the method performed by the terminal device in the method embodiments. In addition, the modules in the apparatus 800 and the foregoing other operations and/or functions are separately used to implement corresponding procedures in the method embodiment of the terminal device in the method embodiments.

The apparatus 800 may implement the steps or the procedures performed by the network device (for example, the first network device or the second network device described above) in the method embodiments according to embodiments of this application. The apparatus 800 may include modules configured to perform the method performed by the network device in the method embodiments. In addition, the modules in the apparatus 800 and the foregoing other operations and/or functions are separately used to implement corresponding procedures in the method embodiment of the network device in the method embodiments.

It should be understood that a specific process in which the modules perform the foregoing corresponding steps is described in detail in the foregoing method embodiments. For brevity, details are not described herein.

The transceiver module 810 in the foregoing embodiments may be implemented by a transceiver or a transceiver-related circuit. The processing module may be implemented by at least one processor or a processor-related circuit, and the storage module may be implemented by at least one storage.

As shown in FIG. 8, an embodiment of this application further provides an apparatus 1400. The apparatus 1400 includes a processor 1410, and may further include one or more storages 1420. The processor 1410 is coupled to the storage 1420. The storage 1420 is configured to store a computer program or instructions and/or data. The processor 1410 is configured to execute the computer program or the instructions and/or the data stored in the storage 1420, so that the methods in the foregoing method embodiments are performed. Optionally, the apparatus 1400 includes one or more processors 1410.

Optionally, the storage 1420 and the processor 1410 may be integrated together, or separately disposed.

Optionally, as shown in FIG. 8, the apparatus 1400 may further include a transceiver 1430. The transceiver 1430 is configured to receive and/or send a signal. For example, the processor 1410 is configured to control the transceiver 1430 to receive and/or send the signal.

In a solution, the apparatus 1400 is configured to implement operations performed by the communication device (for example, the terminal device, the first network device, and the second network device described above) in the foregoing method embodiments.

An embodiment of this application further provides a computer-readable storage medium. The computer-readable storage medium stores computer instructions for implementing the method performed by the communication device (for example, the terminal device, the first network device, and the second network device described above) in the foregoing method embodiments.

For example, when a computer program is executed by a computer, the computer is enabled to implement the method performed by the communication device (for example, the terminal device, the first network device, and the second network device described above) in the foregoing method embodiments.

An embodiment of this application further provides a computer program product including instructions. When the instructions are executed by a computer, the computer is enabled to implement the method performed by the communication device (for example, the terminal device, the first network device, and the second network device described above) in the foregoing method embodiments.

An embodiment of this application further provides a communication system. The communication system includes the terminal device, the first network device, and the second network device in the foregoing embodiments.

For explanations and beneficial effects of related content of any one of the apparatuses provided above, refer to the corresponding method embodiment provided above. Details are not described herein again.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the storage mentioned in this embodiment of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the storage (storage module) may be integrated into the processor.

It should be further noted that the storage described in this specification is intended to include but is not limited to these storages and any storage of another proper type.

A person of ordinary skill in the art may be aware that, in combination with the examples described in embodiments disclosed in this specification, units and steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the protection scope of this application.

In the several embodiments provided in this application, it should be understood that the disclosed apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the foregoing usable media may include but are not limited to: any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a first network device, and the method comprises:
sending first indication information to a second network device, wherein the first indication information indicates the second network device to store immediate minimization of drive tests MDT configuration information of at least one terminal device UE, and the immediate MDT configuration information is used by the at least one UE to perform measurement for MDT data;
receiving immediate MDT configuration information of a target UE sent by the second network device, wherein the target UE is one of the at least one UE;
sending the immediate MDT configuration information of the target UE to the target UE; and
receiving first data sent by the target UE, and obtaining target MDT measurement data of the target UE based on the first data, wherein the first data comprises first MDT measurement data obtained by the target UE and data needed by the first network device to obtain second MDT measurement data.

2. The method according to claim 1, wherein the sending the first indication information to the second network device comprises:
sending the first indication information to the second network device if detecting that the at least one UE enters a radio resource control RRC idle state, or receiving the immediate MDT configuration information of the at least one UE.

3. The method according to claim 1 or 2, wherein the immediate MDT configuration information comprises at least one of the following:
an MDT activation type, an MDT area scope, MDT-based signaling of a public land mobile network PLMN list, an identifier of the first network device, an identifier of the at least one UE, immediate MDT configuration temporary storage duration, and an immediate MDT configuration temporary storage indication.

4. The method according to any one of claims 1 to 3, wherein the immediate MDT configuration information of the at least one UE carries an MDT identifier or does not carry the MDT identifier, and the MDT identifier indicates the first network device to obtain continuous MDT measurement data of the at least one UE across RRC states; and
the method further comprises:
determining whether the immediate MDT configuration information of the target UE carries the MDT identifier; and
if determining that the immediate MDT configuration information of the target UE carries the MDT identifier and the target UE does not need to provide the first data, sending second indication information to the second network device, wherein the second indication information indicates the second network device to release the immediate MDT configuration information of the target UE.

5. The method according to claim 4, wherein the second indication information comprises at least one of the following:
an identifier of the target UE, the identifier of the first network device, and an immediate MDT configuration release indication.

6. A communication method, wherein the method is applied to a second network device, and the method comprises:
receiving first indication information sent by a first network device, wherein the first indication information indicates the second network device to store immediate minimization of drive tests MDT configuration information of at least one terminal device UE, and the immediate MDT configuration information is used by the at least one UE to perform measurement for MDT data;
storing the immediate MDT configuration information of the at least one UE based on the first indication information; and
if a target UE enters a radio resource control RRC connected state or an RRC inactive state from an RRC idle state, sending immediate MDT configuration information of the target UE to the first network device, wherein the target UE is one of the at least one UE.

7. The method according to claim 6, wherein the immediate MDT configuration information comprises at least one of the following:
an MDT activation type, an MDT area scope, MDT-based signaling of a public land mobile network PLMN list, an identifier of the first network device, an identifier of the at least one UE, immediate MDT configuration temporary storage duration, and an immediate MDT configuration temporary storage indication.

8. The method according to claim 6 or 7, wherein the sending the immediate MDT configuration information of the target UE to the first network device comprises: sending the immediate MDT configuration information of the target UE to the first network device based on the first indication information and an identifier of the target UE.

9. The method according to any one of claims 6 to 8, wherein the method further comprises:
receiving second indication information sent by the first network device, wherein the second indication information indicates the second network device to release the immediate MDT configuration information of the target UE; and
releasing the immediate MDT configuration information of the target UE based on the second indication information.

10. The method according to claim 9, wherein the second indication information comprises at least one of the following:
the identifier of the target UE, the identifier of the first network device, and an immediate MDT configuration release indication.

11. The method according to any one of claims 6 to 10, wherein the storing the immediate MDT configuration information of the at least one UE based on the first indication information comprises:
storing the immediate MDT configuration information of the at least one UE within preset duration based on the first indication information.

12. The method according to claim 11, wherein the method further comprises:
if not successfully storing the immediate MDT configuration information of the at least one UE within the preset duration, sending third indication information to the first network device and/or a third network device, wherein the third indication information indicates a failure in storing the immediate MDT configuration information of the at least one UE and a cause of the failure in storing the immediate MDT configuration information of the at least one UE.

13. A communication method, wherein the method is applied to a second network device, and the method comprises:
if receiving immediate minimization of drive tests MDT configuration information of at least one terminal device UE sent by a third network device, storing the immediate MDT configuration information of the at least one UE; and
when a cell accessed by a target UE comprises a target area, sending immediate MDT configuration information of the target UE to a first network device, wherein the target UE is one of the at least one UE, and the target area is in an MDT tracking area comprised in the immediate MDT configuration information of the target UE.

14. The method according to claim 13, wherein the immediate MDT configuration information comprises at least one of the following:
an MDT activation type, an MDT area scope, MDT-based signaling of a public land mobile network PLMN list, an identifier of the first network device, an identifier of the at least one UE, immediate MDT configuration temporary storage duration, and an immediate MDT configuration temporary storage indication.

15. A communication apparatus, comprising a processor and a communication interface, wherein the communication interface is configured to receive a signal from a communication apparatus other than the communication apparatus and transmit the signal to the processor, or send a signal from the processor to a communication apparatus other than the communication apparatus; and the processor is configured to implement the method according to any one of claims 1 to 5, claims 6 to 12, or claims 13 and 14 through a logic circuit or by executing code instructions.

16. A computer-readable storage medium, wherein the computer-readable storage medium stores a computer program, and when the computer program runs, the method according to any one of claims 1 to 5, claims 6 to 12, or claims 13 and 14 is implemented.
